**Europäisches Patentamt**

**European Patent Office**

**Office européen des brevets**

(19)

(11) Veröffentlichungsnummer : **0 422 753 B1**

(12) **EUROPÄISCHE PATENTSCHRIFT**

(45) Veröffentlichungstag der Patentschrift :
07.04.93 Patentblatt 93/14

(51) Int. Cl.⁵ : **C09K 3/18**, **E01C 11/24**,
**C01D 3/26**

(21) Anmeldenummer : 90250255.8

(22) Anmeldetag : 04.10.90

(54) **Verfahren zur Herstellung eines hydrophobe Eigenschaften aufweisenden Feinkorngemisches.**

(30) Priorität : 13.10.89 DE 3934657
25.05.90 DE 4017291
21.06.90 DE 4020009

(43) Veröffentlichungstag der Anmeldung :
17.04.91 Patentblatt 91/16

(45) Bekanntmachung des Hinweises auf die
Patenterteilung :
07.04.93 Patentblatt 93/14

(84) Benannte Vertragsstaaten :
AT BE CH DE DK ES FR GB GR IT LI LU NL SE

(56) Entgegenhaltungen :
DE-A- 2 127 679
DE-A- 2 127 680
DERWENT FILE SUPPLIER WPIL, Derwent Publications Ltd, London, GB

(73) Patentinhaber : MANNESMANN
Aktiengesellschaft
Mannesmannufer 2
W-4000 Düsseldorf 1 (DE)

(72) Erfinder : Siegmund, Werner
Bannholzstrasse 32
W-6901 Heiligkreuzsteinach (DE)
Erfinder : Schmitt, Oskar, M. Prof. Dipl.-Ing.
Zur Fernsicht 21
W-5190 Stolberg (DE)
Erfinder : Kämereit, Wilhelm, Dipl.-Ing.
Bingener Weg 7
W-4000 Düsseldorf 1 (DE)
Erfinder : Weidmann, Volker, Dr.-Ing.
Haverkamp 69
NL-2592 AX Den Haag (NL)
Erfinder : Friedrich, Otto J. Dipl. Chem.
Moltkestrasse 63
W-4000 Düsseldorf 30 (DE)

(74) Vertreter : Meissner, Peter E., Dipl.-Ing. et al
Meissner & Meissner, Patentanwaltsbüro,
Hohenzollerndamm 89
W-1000 Berlin 33 (DE)

**Beschreibung**

Verfahren zur Herstellung eines hydrophobe Eigenschaften aufweisenden Feinkorngemisches

Die Erfindung betrifft ein Verfahren zur Herstellung eines hydrophobe Eigenschaften aufweisenden Feinkorngemisches gemäß dem Gattungsbegriff des Patentanspruchs 1.

Ein derartiges Feinkorngemisch läßt sich als Zuschlagstoff (Füller) für den Bau von Deckschichten von Verkehrsflächen verwenden, z.B. in bitumengebundenen Straßendecken. Aufgrund seines Salzgehaltes bewirkt das zugesetzte Feinkorngemisch auf der Oberfläche der Deckschicht eine Absenkung des Gefrierpunktes. Daher trägt es im Winter zu einer Erhöhung der Verkehrssicherheit bei durch Verhinderung von Eisglätte insbesondere bei um 0°C schwankenden Umgebungstemperaturen und erleichtert die Schneeräumung, weil die Haftung von Schnee auf der Fahrbahnoberfläche deutlich vermindert wird. Wesentlich ist es, daß der Zuschlagstoff hydrophobe Eigenschaften besitzt, um einerseits seine Verarbeitungsfähigkeit zu gewährleisten (Rieselfähigkeit, keine Verklumpung) und andererseits seine gefrierpunktsabsenkende Wirkung trotz des Einflusses von Oberflächenwasser über sehr lange Zeiträume zu erhalten.

Zur Herstellung ähnlich wirkender salzhaltiger Zuschlagstoffe für den Straßendeckenbau sind zahlreiche Verfahren bekannt, bei denen das Salz in gelöster Form in die Hohlräume eines porösen Trägermaterials eingelagert oder an ein Fasermaterial angelagert wird und der Zuschlagstoff, der mit einem Hydrophobierungsmittel vermischt wurde, durch Trocknung und anschließende Mahlung erhalten wird. Exemplarisch kann hierzu verwiesen werden auf die DE-PS 25 12 691, EP-PS 00 22 055, DE-PS 29 46 823, EP-PS 00 48 417 und DE-PS 31 47 773. Ein Nachteil dieser Verfahren ist in dem zur Trocknung erforderlichen Energieaufwand zu sehen.

Dieser Nachteil wird durch ein Verfahren beseitigt, das aus der EP-PS 0 153 269 bekannt und bezüglich der vorliegenden Erfindung als gattungsgemäß anzusehen ist. Dieses Verfahren vermeidet eine Trocknung des Zuschlagstoffes, da die hydrophilen (Salz und ggf. Lavamehl und/oder Quarzmehl) und die hydrophoben (Polyurethanhartschaummehl und/oder Ruß und/oder gebrannter Perlit) Komponenten dieses Zuschlagstoffes trocken zusammengeführt und gemeinsam gemahlen werden, ohne daß dazwischen eine flüssige Phase benutzt wird. Das so erzeugte Feinkorngemisch, dessen Körnung unter 0,2 mm, vorzugsweise unter 0,1 mm liegt, ist daher im Unterschied zu den mit flüssiger Phase arbeitenden Verfahren frei von nach dem Zusammenführen der Komponenten entstandenen Rekristallisationsprodukten oder Gelen.

Bei der Herstellung des gattungsgemäßen Feinkorngemisches stellt der Anteil des benötigten Salzes (insbesondere Natriumchlorid) einen erheblichen Kostenfaktor dar. Man ist daher bestrebt, möglichst kostengünstige Abfallsalze (z.B. aus der Kaligewinnung) für diesen Zweck einzusetzen, zumal an die Reinheit des Salzes an sich keine besonderen Anforderungen gestellt werden. Es muß lediglich frei sein von umweltschädlichen Begleitstoffen.

Da aber der Kostenaufwand selbst für Kaliabfallsalze noch beträchtlich ist, besteht der Wunsch, in dieser Hinsicht noch kostengünstigere Alternativen zu erschließen. Eine Möglichkeit hierzu kann in Rückstandssalzen gesehen werden, wie sie beispielsweise bei der Glyzerinherstellung durch Destillation von Unterlaugenrohglyzerin aus der Seifenproduktion anfallen und die im wesentlichen Natriumchlorid enthalten und mit Begleitstoffen verunreinigt sind.

Die Verwendung derartiger Rückstandssalze aus der Glyzerinherstellung in dem gattungsgemäßen Verfahren stößt jedoch auf Schwierigkeiten. Zum einen steht zu befürchten, daß die im Salz enthaltenen Seifenanteile unter Feuchtigkeitseinfluß in Lösung gehen und zu einer unerwünschten und nicht zulässigen Glättebildung auf der feuchten Straßendeckschicht führen. Zum anderen hat sich in Versuchen herausgestellt, daß dieses Rückstandssalz in dem gattungsgemäßen Verfahren nicht zu einem Feinkorngemisch mit hydrophoben Eigenschaften führt. Auch der Einsatz hochwirksamer anderer, aber extrem teurer Hydrophobierungsmittel erbringt, selbst wenn diese Mittel in größeren Mengen eingesetzt werden, keine oder zumindest keine ausreichende Hydrophobierung des Feinkorngemischs. Diese Rückstandssalze sind daher bisher weder im Hinblick auf den angestrebten Kostensenkungseffekt (Kostenerhöhung durch teure Hydrophobierungsmittel) noch in technischer Hinsicht für die Herstellung eisbildungshemmender Straßenbauzuschlagstoffe geeignet.

Aufgabe der Erfindung ist es daher, die Verwendbarkeit von Rückstandssalzen insbesondere aus der oben genannten Art der Glyzerinherstellung für die Herstellung eines Füllers für Deckschichten von Verkehrsflächen zu ermöglichen, d.h. insbesondere einen Weg aufzuzeigen, mit dem kostengünstig eine zufriedenstellende Hydrophobierung des Feinkorngemisches erreicht werden kann.

Gelöst wird diese Aufgabe erfindungsgemäß bei dem gattungsgemäßen Verfahren durch die kennzeichnenden Merkmale des Patentanspruchs 1. Vorteilhafte Weiterbildungen der Erfindung sind in den Unteransprüchen 2 bis 12 angegeben.

Da das bei der genannten Glyzerinherstellung anfallende Rückstandssalz bisher nur in begrenztem Umfang einer neuen Verwendung zugeführt wurde und bei großem Mengenanfall als Sondermüll unter Kostenaufwand entsorgt werden muß, war es ganz besonders erstrebenswert, eine zusätzliche Wiederverwendungsmöglichkeit in dem patentgemäßen Feinkorngemisch zu erschließen. Völlig unerwartet waren jedoch die Schwierigkeiten hinsichtlich der Hydrophobierung des Gemisches, die selbst mit hochwirksamen Hydrophobierungsmitteln nicht befriedigend möglich war. Umso überraschender was es daher, daß herausgefunden werden konnte, daß nach einem gemeinsamen Vermahlen des Rückstandssalzes mit (bezogen auf den Rückstandssalzanteil) 0,5 - 45 Gewichts-% eines Salzes oder Oxids oder Hydroxids (Zusatzstoff), dessen Kationen nicht aus Alkalimetallen bestehen, bereits eine sehr gute Hydrophobierung erreicht wird. Besonders eignen sich Salze und Hydroxide mit Fe, Zn, Al oder Ca als Kationen. Das gemeinsame Vermahlen erfolgt zweckmäßig weder in nassem noch in völlig trockenem Zustand, sondern erfordert lediglich einen leicht feuchten Zustand. Bei zu hoher Feuchtigkeit wird vor oder während dem Mahlen gegebenenfalls eine entsprechende Trocknung durchgeführt. Es muß lediglich sichergestellt sein, daß das Produkt rieselfähig ist. Gegenüber den bekannten Naßherstellungsverfahren ist der Energieeinsatz dafür jedoch vergleichsweise gering. Im Regelfall kann auf eine gesonderte Trocknung verzichtet werden. Zur Erzielung besonders guter hydrophober Eigenschaften des Feinkorngemisches können beim Mahlen oder in einem anschließenden Mischvorgang auch noch zusätzliche Hydrophobierungsmittel zugesetzt werden. So ist beispielsweise die Verwendung kostengünstiger Hydrophobierungsmittel wie Polyurethanhartschaummehl, Ruß oder gebrannter Perlit ohne weiteres möglich.

Ein ganz besonderer Vorteil der Erfindung besteht darin, daß als Zusatzstoff auch Kalziumsulfat in Form von Rauchgasgips aus Rauchgasentschwefelungsanlagen herangezogen werden kann, so daß in dem erfindungsgemäßen Verfahren neben dem Rückstandssalz ein weiteres Abfallprodukt eingesetzt und zu einem wirtschaftlich und technisch hochwertigen Produkt umgewandelt werden kann. Der in den Rauchgasentschwefelungsanlagen anfallende Gips ist in der Regel nicht mehr ausgesprochen naß, sondern weist nur eine gewisse Restfeuchtigkeit auf. In diesem normal feuchten Zustand eignet er sich für das erfindungsgemäße Verfahren in hervorragender Weise, da sich eine gesonderte Trocknung des Produktes vor oder nach dem gemeinsamen Vermahlen mit dem Rückstandssalz vielfach erübrigt.

In vielen Fällen empfiehlt es sich, zur Vermeidung von Verklumpungen und Anbackungen beim gemeinsamen Mahlen weitere Stoffe als Mahlhilfe zuzusetzen. Besonders geeignet sind Steinmehl oder Gesteinssand (z.B. in Form von Lava, Kalk oder Quarz) oder nach Kraftwerksasche.

Die Mindestmenge, die als Zusatzstoff eingesetzt werden muß, ist abhängig von der Art des Zusatzstoffs und kann durch einfache Versuche leicht ermittelt werden. Ein Anteil von 0,5 Gewichts-% ist auch bei hochwirksamen Zusatzstoffen mindestens erforderlich, während ein Anteil von über 45 Gewichts-% in keinem Fall noch eine Steigerung der Hydrophobierung bewirkt. Die erzielbare Hydrophobierung ist auch ohne Zusatz spezieller Hydrophobierungsmittel am Ende des gemeinsamen Mahlens von Rückstandssalz und Zusatzstoff vielfach so gut, daß das so erzeugte Produkt seinerseits wie ein Hydrophobierungsmittel zur Hydrophobierung von weiterem Salz eingesetzt werden kann. Dieses zusätzliche Salz kann Rückstandssalz oder auch ein beliebiges anderes gefrierpunktsabsenkendes Salz sein.

Es kann dabei mit dem zusätzlichen Salz entweder gemeinsam trocken vermahlen oder nach getrenntem Vermahlen des zusätzlichen Salzes auf im wesentlichen unter 0,09 mm Korngröße mit diesem vermischt werden und liefert ein Endprodukt mit guten hydrophoben Eigenschaften, das den großen Vorteil hat, einen ganz besonders hohen Salzanteil aufzuweisen, der zur Absenkung des Gefrierpunktes z.B. in einem Straßenbelag nutzbar ist.

Bei Verwendung von zusätzlichen Hydrophobierungsmitteln wie etwa Polyurethanhartschaummehl oder gebrannte Perlite sollte der Anteil dieser Hydrophobierungsmittel (bezogen auf den Anteil der hydrophilen Komponente) vorteilhafterweise mindestens bei 8 - 10 Gewichts-% liegen. Die Verwendung von Ruß allein als zusätzliches Hydrophobierungsmittel ist weniger ratsam. Dagegen erhält man beim Zusatz von Polyurethanhartschaummehl in Verbindung mit Ruß (etwa 1-6 Gewichts-% der hydrophilen Komponente) ausgezeichnete Resultate.

Im folgenden wird die Wirksamkeit des erfindungsgemäßen Verfahrens anhand von Vergleichsversuchen näher erläutert.

In einem ersten Versuch wurden in einem Zwangsmischer 80 Gewichts-% Rückstandssalz aus der Glyzerinherstellung, 10 Gewichts-% Lavamehl und 10 Gewichts-% Polyurethanhartschaummehl vermischt und anschließend gemeinsam bis auf eine Korngröße unter 0,09 mm gemahlen. Das so hergestellte Feinkorngemisch wurde einer Hydrophobierungsprüfung unterzogen, bei der auf die Oberfläche einer Probe dieses Feinkorngemischs ein Wassertropfen vorsichtig aufgesetzt wurde. Der Wassertropfen begann sofort in das Feinkorngemisch einzusinken und war nach weniger als einer Minute völlig von der Probenoberfläche verschwunden.

In einem zweiten Versuch wurde anstelle des unbehandelten Rückstandssalzes ein vermischtes Rückstandssalz verwendet, das zu 85 Gewichts-% aus Salz und zu 15 Gewichts-% aus Rauchgasgips bestand. Im übrigen war die Herstellung und Zusammensetzung gegenüber dem ersten Versuch unverändert. Bei der Überprüfung der Hydrophobierung an einer Probe dieses zweiten Feinkorngemischs blieb der aufgesetzte Wassertropfen über 30 min praktisch unverändert stehen. Nach 3 Std. stand der Wassertropfen immer noch auf dem Feinkorngemisch, wenn auch in Form eines flachen Zylinders. Ein nennenswertes Einsinken in das Gemisch konnte nicht festgestellt werden, vielmehr verdunstete der Wassertropfen vorher vollständig.

In einem dritten Versuch wurde das Rückstandssalz nicht bereits vor dem gemeinsamen Mahlen der verschiedenen Feinkorngemischanteile gemäß Versuch 2 mit dem Rauchgasgips vermischt, sondern sämtliche Anteile wurden erst beim Mahlen zusammengeführt. Die hydrophoben Eigenschaften des so erzeugten Feinkorngemischs erwiesen sich dabei aber gegenüber denen aus dem zweiten Versuch als nicht ganz so gut.

Es wurde noch eine weitere Abwandlung des zweiten Versuchs durchgeführt, bei der zunächst der Anteil des mit Rauchgasgips vermischtem Rückstandssalzes und eine Teilmenge des Lavamehls zu einer Vormischung gemeinsam auf eine Korngröße unter 0,09 mm vermahlen wurde und diese Vormischung erst danach in einem Zwangsmischer mit dem zuvor mit der Restmenge des Lavamehls auf deutlich unter 0,09 mm vermahlenen Polyurethanhartschaummehl vermischt wurde. Auch dieses Feinkorngemisch zeigte eine sehr gute hydrophobe Wirkung.

In einem fünften Versuch wurde ein Hydrophobierungstest an einem erfindungsgemäßen Produkt ausgeführt, das aus 80 Gewichts-% Rückstandssalz und 20 Gewichts-% Rauchgasgips durch gemeinsames Mahlen auf eine Korngröße unter 0,09 mm entstanden war. Ein aufgesetzter Wassertropfen blieb deutlich länger als 1 Stunde stehen, ohne daß eine nennenswerte Durchfeuchtung der Aufstandsfläche oder ein Auslaufen zu beobachten war.

Schließlich wurde in einem letzten Versuch eine Menge von 15 Gewichts-% des im fünften Versuch erzeugten Pulvers zusammen mit 13 Gewichts-% Gesteinsmehl und 72 Gewichts-% Salz, das im wesentlichen aus NaCl bestand, trocken vermahlen. Auch diese neue Produkt glich hinsichtlich seiner hydrophoben Eigenschaften der Probe aus dem 5. Versuch.

Das erfindungsgemäß hergestellte Feinkorngemisch läßt sich problemlos wie ein konventioneller Füller als Zuschlagstoff z.B. für bitumengebundene Deckbeläge von Verkehrsflächen verarbeiten. Diese Deckbeläge weisen bei Temperaturen bis zu einigen Grad Celsius unter null eine ausgezeichnete, die Eisbildung hemmende Wirkung auf, die über sehr lange Zeiträume erhalten bleibt.

So konnte beispielsweise an Probekörpern, in denen der erfindungsgemäße Zuschlagstoff enthalten war und die ohne Verkehrsbelastung einer natürlichen Bewitterung ausgesetzt waren, auch nach 3 Jahren noch die eisbildungshemmende Wirkung nachgewiesen werden. Erst recht bleibt diese Langzeitwirkung unter Verkehrsbelastung erhalten, da durch den ständigen geringen Verschleiß einer Deckschicht von den in der Asphaltmasse gleichmäßig verteilten kleinen Salzpartikeln stets neue freigelegt werden, so daß ständig wirksames Salz verfügbar ist. Das erfindungsgemäße Feinkorngemisch bewirkt auch keine Beeinträchtigung der Oberflächengriffigkeit bei nasser Deckschicht.

## Patentansprüche

1. Verfahren zur Herstellung eines hydrophobe Eigenschaften aufweisenden Feinkorngemisches mit im wesentlichen unter 0,2 mm, vorzugsweise unter 0,1 mm liegender Körnung, welches statistisch gleichmäßig verteilt mindestens aus einer mineralischen hydrophilen Komponente, die mindestens ein Salz enthält, und aus mindestens einer hydrophobierenden Komponente besteht, wobei der Anteil des Salzes am Feinkorngemisch mindestens 50 Gewichts-% beträgt und wobei die Komponenten gemeinsam gemahlen oder nach zumindest teilweise getrenntem Mahlen miteinander vermischt werden, dadurch gekennzeichnet, daß als Salz ein Rückstandssalz, insbesondere ein bei der Glyzerinherstellung entstandenes im wesentlichen aus Natriumchlorid bestehendes Rückstandssalz verwendet wird, und daß bezogen auf den Anteil des Rückstandssalzes 0,5 - 45 Gewichts-% eines weiteren Salzes oder eines Oxids oder eines Hydroxids (Zusatzstoff) in feuchtem Zustand mit mindestens einem Teil des Rückstandssalzes vermischt und gemeinsam vermahlen werden, wobei der Zusatzstoff als Kationen Erdalkalimetalle oder andere Nichtalkalimetalle enthält.

2. Verfahren nach Anspruch 1,
   dadurch gekennzeichnet,
   daß das feuchte Gemisch vor oder während dem gemeinsamen Mahlen getrocknet wird.

3. Verfahren nach Anspruch 1 oder 2,
   dadurch gekennzeichnet,
   daß beim gemeinsamen Mahlen des Rückstandssalzes und des Zusatzstoffs Steinmehl oder Gesteinssand als Mahlhilfe zugesetzt wird.

4. Verfahren nach einem der Ansprüche 1 bis 3,
dadurch gekennzeichnet,
daß als Zusatzstoff ein Fe, Zn, Al oder Ca als Kationen enthaltendes Salz oder Oxid oder Hydroxid verwendet wird.

5. Verfahren nach Anspruch 4,
dadurch gekennzeichnet,
daß als Zusatzstoff Kalziumsulfat, insbesondere in Form von in Rauchgasentschwefelungsanlagen anfallendem Rauchgasgips in normal feuchtem Zustand, verwendet wird.

6. Verfahren nach einem der Ansprüche 1 bis 5,
dadurch gekennzeichnet,
daß nach gemeinsamem Mahlen des mit dem Zusatzstoff vermischten Rückstandssalzes das so erzeugte Produkt mit getrennt gemahlenem zusätzlichem Salz vermischt oder gemeinsam mit zusätzlichem Salz vermahlen wird.

7. Verfahren nach einem der Ansprüche 1 bis 6,
dadurch gekennzeichnet,
daß zur Erzielung besonderer hydrophober Eigenschaften während des gemeinsamen Mahlens oder beim Mischen zusätzlich noch herkömmliche Hydrophobierungsmittel, insbesondere Ruß, Polyurethan-Hartschaummehl und/oder gebrannter Perlit, zugesetzt werden.

8. Verfahren nach Anspruch 7,
dadurch gekennzeichnet,
daß das Polyurethanhartschaummehl oder der gebrannte Perlit bezogen auf den Anteil der hydrophilen Komponente in einer Menge von mindestens 8-10 Gewichts-% eingesetzt wird.

9. Verfahren nach Anspruch 7 oder 8,
dadurch gekennzeichnet,
daß als hydrophobierende Komponente Polyurethanhartschaummehl in Verbindung mit Ruß verwendet wird, wobei die Menge des Ruß bezogen auf die hydrophile Komponente auf 1-6 Gewichts-% beschränkt wird.

10. Verfahren nach einem der Ansprüche 5 bis 9,
dadurch gekennzeichnet,
daß 80-85 Gewichts-% verunreinigtes Rückstandssalz und 20-15 Gewichts-% Rauchgasgips vermischt werden.

11. Verfahren nach Anspruch 8 und 10,
dadurch gekennzeichnet,
daß ein Feinkorngemisch hergestellt wird mit folgender Zusammensetzung:
80 Gewichts-%   mit Rauchgasgips vermischtes Rückstandssalz,
10 Gewichts-%   Polyurethanhartschaummehl,
10 Gewichts-%   Lavamehl.

12. Verfahren nach Anspruch 9 und 10,
dadurch gekennzeichnet,
daß ein Feinkorngemisch hergestellt wird mit folgender Zusammensetzung:
80 Gewichts-%   mit Rauchgasgips vermischtes Rückstandssalz,
10 Gewichts-%   Polyurethanhartschaummehl,
4 Gewichts-%   Ruß,
6 Gewichts-%   Lavamehl.

## Claims

1. A process for producing a fine-grain mixture having hydrophobic properties, with a grain size lying essentially below 0.2 mm, preferably below 0.1 mm, which consists, randomly and regularly distributed, at least of one mineral hydrophilic constituent which contains at least one salt, and of at least one hydrophobising constituent, the content of the salt in the fine-grain mixture being at least 50% by weight and the constituents being ground jointly or being mixed together after at least partially separated grinding, characterised in that

a residual salt, in particular a residual salt which has resulted from glycerol production and consists essentially of sodium chloride, is used as the salt, and that relative to the content of the residual salt 0.5 - 45% by weight of a further salt or of an oxide or of a hydroxide (additive) is mixed in the moist state with at least a part of the residual salt and are jointly ground, the additive containing alkaline earth metals or other non-alkali metals as cations.

2. A process according to Claim 1, characterised in that the moist mixture is dried before or during the joint grinding.

3. A process according to Claim 1 or 2, characterised in that rock meal or stone sand are added as a grinding aid during the joint grinding of the residual salt and of the additive.

4. A process according to one of Claims 1 to 3, characterised in that a salt or oxide or hydroxide containing Fe, Zn, Al or Ca as cations is used as the additive.

5. A process according to Claim 4, characterised in that calcium sulphate, in particular in the form of flue gas gypsum which occurs in flue gas desulphurisation plants in a normally moist state is used as the additive.

6. A process according to one of Claims 1 to 5, characterised in that after the joint grinding of the residual salt mixed with the additive the product thus produced is mixed with separately ground additional salt or is ground jointly with additional salt.

7. A process according to one or more of Claims 1 to 6, characterised in that in order to achieve special hydrophobic properties conventional water-repellent agents, in particular soot, polyurethane rigid foam meal and or burned perlite, are additionally added during the joint grinding or during mixing.

8. A process according to Claim 7, characterised in that the polyurethane rigid foam meal or the burned perlite are used in a quantity of at least 8-10% by weight, relative to the content of the hydrophilic constituent.

9. A process according to Claim 7 or 8, characterised in that polyurethane rigid foam meal in conjunction with soot is used as the hydrophobising constituent, the quantity of the soot relative to the hydrophilic constituent being restricted to 1-6% by weight.

10. A process according to one of Claims 5 to 9, characterised in that 80-85% by weight contaminated residual salt and 20-15% by weight flue gas gypsum are mixed.

11. A process according to Claims 8 and 10, characterised in that a fine-grain mixture is produced with the following composition:
80% by weight     residual salt mixed with flue gas gypsum,
10% by weight     polyurethane rigid foam meal,
10% by weight     lava meal.

12. A process according to Claim 9 and 10, characterised in that a fine-grain mixture is produced with the following composition:
80% by weight     residual salt mixed with flue gas gypsum,
10% by weight     polyurethane rigid foam meal,
4% by weight     soot,
6% by weight     lava meal.

**Revendications**

1. Procédé pour fabriquer un mélange à grains fins présentant des propriétés hydrophobes, ayant une taille de grains généralement inférieure à 0,2 mm, de préférence inférieure à 0,1 mm, lequel est constitué, de façon régulièrement statistiquement répartie, d'au moins un composant minéral hydrophile qui contient au moins un sel et d'au moins un composant hydrophobe, la proportion du sel dans le mélange à grains fins valant au moins 50 % en poids, et les composants étant broyés ensemble ou, après un broyage au moins partiellement séparé, étant mélangés les uns aux autres,
caractérisé en ce que, en tant que sel, un sel résiduaire, en particulier un sel résiduaire constitué essentiellement de chlorure de sodium, formé lors de fabrication de la glycérine, est utilisé, et en ce que, relativement à la proportion du sel résiduaire, 0,5 à 45 % en poids d'un autre sel ou d'un oxyde ou d'un hydroxyde (additif) à l'état humide sont mélangés à au moins une partie du sel résiduaire et broyés ensemble, l'additif contenant, en tant que cations, des métaux alcalino-terreux ou d'autres métaux non alcalins.

2. Procédé selon la revendication 1,
caractérisé en ce que le mélange humide est séché avant ou pendant le broyage commun.

3. Procédé selon la revendication 1 ou 2,
caractérisé en ce que, lors du broyage commun du sel résiduaire et de l'additif, de la poudre de roche ou du sable de roche est ajouté comme auxiliaire de broyage.

4. Procédé selon une des revendications 1 à 3,
caractérisé en ce que, en tant qu'additif, un hydroxyde ou un oxyde ou un sel contenant Fe, Zn, Al ou Ca en tant que cations est utilisé.

5. Procédé selon la revendication 4,
caractérisé en ce que, en tant qu'additif, du sulfate de calcium, en particulier sous forme de gypse de gaz de fumée produit dans des installations de désulfuration de gaz de fumée dans l'état normalement humide, est utilisé.

6. Procédé selon une des revendications 1 à 5,
caractérisé en ce que, après broyage commun du sel résiduaire mélangé à l'additif, le produit ainsi créé est mélangé avec du sel supplémentaire broyé séparément ou est broyé en commun avec du sel supplémentaire.

7. Procédé selon une des revendications 1 à 6,
caractérisé en ce que, pour obtenir des propriétés hydrophobes particulières pendant le broyage commun ou lors du mélange, des milieux hydrophobes usuels, en particulier du noir de carbone, de la poudre de mousse rigide de polyuréthane et/ou de la perlite calcinée, sont encore ajoutés.

8. Procédé selon la revendication 7,
caractérisé en ce que la poudre de mousse rigide de polyuréthane ou la perlite calcinée, relativement à la proportion du composant hydrophile, est utilisée en une quantité d'au moins 8-10 % en poids.

9. Procédé selon la revendication 7 ou 8,
caractérisé en ce que, en tant que composant hydrophobe, de la poudre de mousse rigide de polyuréthane est utilisée en liaison avec du noir de carbone, la quantité du noir de carbone, relativement au composant hydrophile, étant limitée à 1-6 % en poids.

10. Procédé selon une des revendications 5 à 9,
caractérisé en ce que 80-85 % en poids de sel résiduaire pollué et 20-15 % en poids de gypse de gaz de fumée sont mélangés.

11. Procédé selon les revendications 8 et 10,
caractérisé en ce qu'un mélange à grains fins ayant la composition suivante est fabriqué :

```
- sel résiduaire mélangé à du gypse
  de gaz de fumée                          80 % en poids
- poudre de mousse rigide de
  polyuréthane                             10 % en poids
- poudre de lave                           10 % en poids.
```

12. Procédé selon les revendications 9 et 10,
caractérisé en ce qu'un mélange à grains fins ayant la composition suivante est fabriqué :

```
- sel résiduaire mélangé à du gypse
  de gaz de fumée                          80 % en poids
- poudre de moussse rigide de
  polyuréthane                             10 % en poids
- noir de carbone                           4 % en poids
- poudre de lave                            6 % en poids.
```